# EUROPEAN PATENT APPLICATION

(11) **EP 1 045 566 A2**
(43) Date of publication of application: **18.10.2000**
(21) Application number: 00660036.5
(22) Date of filing: 01.03.2000
(51) Int. Cl.: H04M 3/38, H04M 3/42, H04M 3/22, H04M 7/00

(54) **Method and system for updating information in a telephone exchange system**

(30) Priority: 13.04.1999 FI 990810
(71) Applicant: Nokia Networks OY, 00045 Nokia Group (FI)
(72) Inventor: Molin, Sakari, 04400 Järvenpää (FI)
(74) Representative: Simmelvuo, Markku Kalevi

(57) **Abstract**

Method and system for updating a password in a telecommunication network comprising a source system (LE1) ; a target system (LE2); an operation and maintenance network (OM) formed between the source and target systems (LE1, LE2); and an operation and maintenance center (OMC) connected to the operation and maintenance network (OM). In an embodiment, log-on into the source system (LE1) is accomplished by supplying a user identification and a password corresponding to it, a connection for a remote session is set up via the operation and maintenance center (OMC) to the target system (LE2), the password is checked for correctness in the source and/or target system (LE1, LE2) by comparing the password with the password corresponding to the user identification that has been stored in the source and/or target system. According to the invention, when the password corresponding to the user identification is to be changed, the first password valid at the instant of change is stored as the old password for the user identification in question; the new password that will be valid after the change is stored; the old and the new passwords are sent to the target system (LE2); and log-on in the target system is accepted if the old or the new password is correct.

## Description

### FIELD OF THE INVENTION

The present invention relates to telecommunication systems. In particular, the invention concerns a new type of method and system for updating a password in a telephone exchange system.

### BACKGROUND OF THE INVENTION

A telephone network generally consists of a plurality of separate telephone exchanges connected to each other via transmission lines. The telephone network is managed and maintained via an operation and maintenance network (O&M-network), which can be implemented e.g. on the basis of the services of an X.25 packet network. The operation and maintenance network is created by connecting to it the telephone exchanges and other network components to be controlled. The other network components to be controlled include e.g. the transcoder (TC), base transceiver station (BTS) and base station controller (BSC). The functions for operating the telephone network are mainly concentrated in control rooms and in network elements centralizing operation and maintenance. An example of centralizing network elements like this is the DX 200 OMC manufactured by Nokia.

From centralizing telephone network elements, it is possible to set up remote session connections to other telephone exchanges or telephone switching systems. When a remote session is established, the source system, i.e. e.g. a centralizing network element, sends user identification data, a user identification and a password, to the target system. The target system is e.g. a telephone switching system.

In the DX 200 telephone switching system and in the user interface (Man Machine Interface, MMI) of the operation and maintenance network, the user's authority and rights are determined on the basis of the user identification (user ID). For each user ID, an individual password has been defined for the verification of authenticity of the user. To minimize the data security risks, it is necessary to change the password frequently enough to ensure that an unauthorized person will not be able to utilize a user ID not belonging to him/her.

When the operation and maintenance network comprises many telephone exchanges and telephone switching systems, the management of the user ID's and passwords is difficult and involves problems. It is often desirable that any changes concerning the user ID apply to all components comprised in the operation and maintenance network. One of such changes is the change of the password. This is intended to guarantee and ensure that the user will not have to change the password in all the network components to which he/she sets up remote connections or sessions via a centralizing network element.

The reliability of the operation and maintenance network is often insufficient to guarantee that the changes are updated in all the components comprised in the network. For the same reason, concentrating the management of the information relating to user ID's in a single telephone exchange or telephone switching system is not feasible because the connection to the centralized system may be broken when one wants to operate locally on a network element.

The object of the present invention is to eliminate the drawbacks referred to above or at least to significantly alleviate them.

A specific object of the invention is to disclose a new type of method whereby a user can be transparently and reliably guaranteed successful setup of a remote session after the user has changed his/her password. A further object of the invention is to reliably update a password changed by the user in the entire network.

Another object of the present invention is to disclose a system which will implement the above-mentioned method and which can be easily implemented in an existing telephone network.

As for the features characteristic of the invention, reference is made to the attached claims.

### DESCRIPTION OF THE INVENTION

The present invention concerns a method for updating a password in a telecommunication network. The telecommunication network preferably comprises a source system, a target system and an operation and maintenance network formed between the source and target systems. The source and target systems are preferably telephone switching systems. Connected to the operation and maintenance network is additionally an operation and maintenance center, from which the operation and maintenance network and its users are mainly controlled. In the method, a user logs on in the source system by giving a user identification and a valid first password corresponding to it. A remote session connection is set up via the operation and maintenance center to a target system chosen by the user, e.g. to a telephone exchange in any part of the telephone network. When the user is setting up a remote session, the password supplied by the user is checked for correctness in the source and/or target system by comparing the password with the password corresponding to the user identification which has been stored in the source and/or target system.

According to the invention, when the user changes his/her password, i.e. when the old password that was valid at the instant of change is changed, the password valid at the instant of change is stored for the user ID in question. After this, the new password that will be valid after the change is saved as a new valid password. When the user logs on into a target system, the old and new passwords are sent to the target system, whereupon the log-on of the user in the target system is accepted if either one of the passwords is correct.

After the user has successfully logged on in the target system, the old password in the target system can be reliably updated with the new password, knowing that the user is an authorized user and has accepted the change of the password him/herself. The basis for this is that the new password has been first checked in the target system and when it has been detected that the new password is not correct, the old password has been checked. If the old password is correct, then the new password has not yet been updated in the target system. In this case, the system automatically updates the password in its target system, making the new password the valid password. In the updating of passwords, the principle is that for each user there are only two passwords stored at a time. In practice, this means that when the user changes his/her password and his/her currently valid password is stored, the password stored earlier is replaced with the password being stored. Likewise, when a new password is stored, the password that was valid before is also replaced with the new password.

In general, primarily the new password which the user has last set as his/her valid password is checked. The old password is sent to the target system only to ensure that the user will not have to remember the old password him/herself.

On the other hand, it is also possible to check the old password as the primary password in the target system, in which case the new password is updated in the target system if the old password is correct. Further, if the old password is not correct, then the new password is checked, and if it is correct, then normal operation is continued.

As compared with prior art, the present invention provides the advantage of improving the usability of the system because the user does not have to log on separately in each system comprised in the operation and maintenance network to change the password, the password being updated automatically in conjunction with the initiation of a remote session. This facilitates and accelerates the user's work in the operation and maintenance network.

A further advantage of the invention is that the password need not be updated in all the systems in the operation and maintenance network at the same time, which reduces network occupancy and improves the reliability of the updating of the password as it is updated when the user logs on in one of the systems. Therefore, interruptions in the operation of the operation and maintenance network relating to a given system or given systems will not affect the user's work because always when the user establishes connection to a system, he/she either already has an updated password in use or the password is updated in conjunction with the initiation of the session.

### LIST OF ILLUSTRATIONS

In the following, the invention will be described in detail by the aid of a few examples of its embodiments with reference to the attached drawing, wherein
Fig. 1 presents an embodiment of the system of the invention,
Fig. 2 presents a service block according to the invention, incorporated in a telephone exchange, and
Fig. 3 is a block diagram representing a method according to the invention.

### DETAILED DESCRIPTION OF THE INVENTION

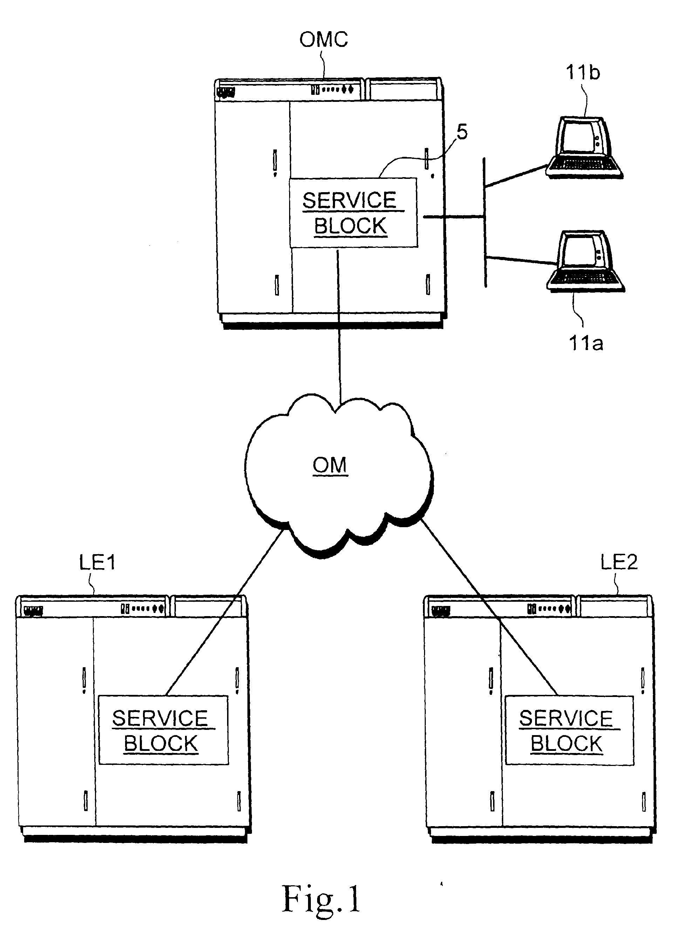

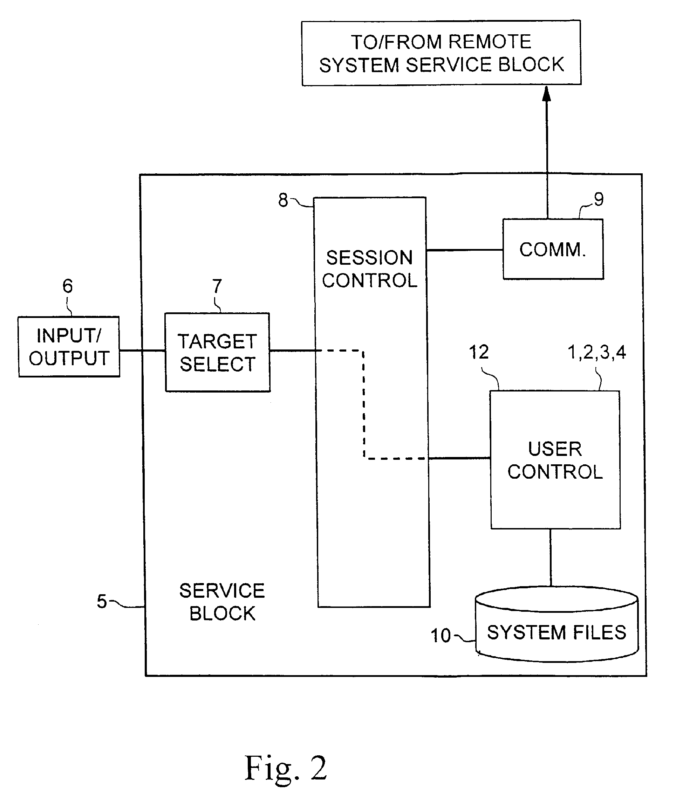

The system presented in Fig. 1 comprises a first telephone exchange LE1, a second telephone exchange LE2, an operation and maintenance network OM established between the telephone exchanges and an operation and maintenance center OMC connected to the operation and maintenance network OM. In a preferred case, the telephone exchange may be a DX 200 switching center manufactured by the applicant, and the operation and maintenance center OMC may be a DX 200 OMC. Each exchange comprises a service block 5, which is a certain aggregate consisting of software and peripherals, which the operator can use to carry out operation and maintenance functions in the operation and maintenance network OM. In practice, this is an interface between the user and a machine or telephone exchange, through which the user can access the system and issue commands to it. This block is described in greater detail in conjunction with Fig. 2. In addition, the system presented in Fig. 1 comprises two workstations 11A, 11B, by means of which a connection to the operation and maintenance network OM is established via the service block 5. These workstations may be ordinary personal computers or equivalent, comprising a display and a keyboard by means of which the user can interactively communicate information with the operation and maintenance network OM.

Fig. 2 illustrates the structure and operation of a service block 5. The figure only shows components that are essential in regard of the invention. The service block 5 comprises an input and output service block 6, which provides input and output system services to other blocks in the service block. Thus, block 6 serves to connect the service block 5 to external peripherals, such as a display, keyboard, printer and storage device. Moreover, the service block presented in Fig. 2 comprises a target selection block 7, which is used to select the system to which the user wants to set up a connection for a session. In practice, the system may be a local system, i.e. the source system to which the user's workstation is connected, or it may be a remote system, i.e. a target system to which a connection is set up via the operation and maintenance network.

The user's session is controlled by a session control block 8, which communicates with a user control block 12 and a communication block 9. The user control block 12 in practice contains means 1 for storing, specifically for each user ID, the old password valid at the instant of change, means 2 for storing the new password as the password that will be valid after the change, means 3 for sending the old and new passwords to the target system and means 4 for checking the old or the new password for correctness. The user control block 12 further communicates with a system file block or database 10, in which user information including passwords is stored. The information in the database 10 is updated using the above-mentioned means 1 and 2. Via the communication block 9, the service block establishes remote connections to the service blocks in other telephone exchanges in accordance with instructions given by the target selection block 7. When a remote connection is set up, the user control block 12 fetches the old and the new password from the database 10 and sends them via the communication block 9 to the target system. In practice, the communication block 9 functions as an interface and a buffer between the source and target systems.

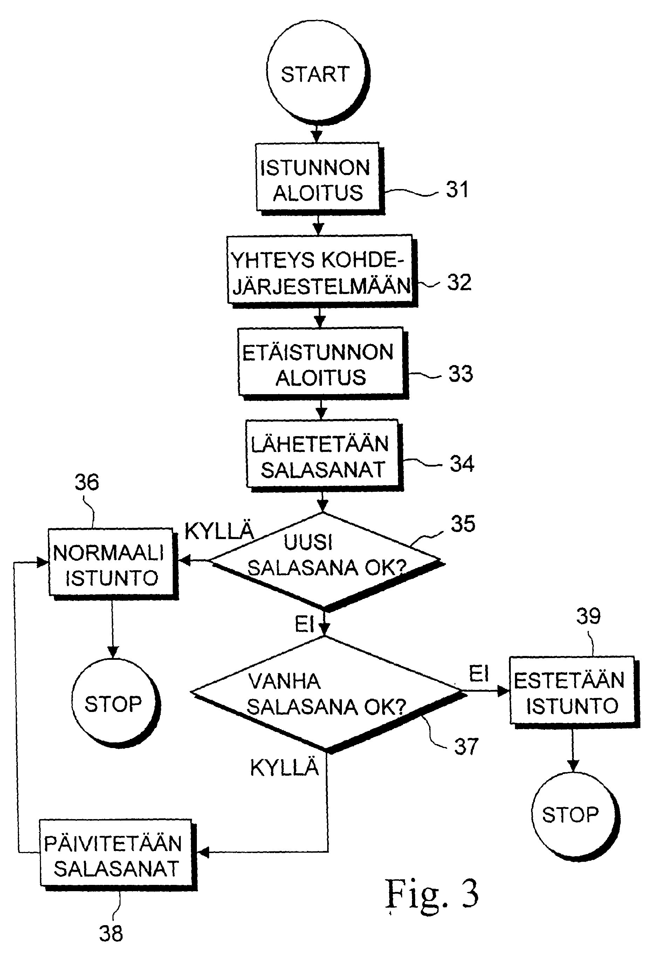

In Fig. 3, a preferred method according to the invention is presented in the form of a block diagram. The user starts a session by establishing a connection to the local telephone exchange or source system, block 31. Next, a connection is set up from the source system to the target system, block 32. The user starts a remote session by giving a corresponding command to the source system, block 33. Based on this, the source system sends the old and the new password to the target system, block 34.

In the target system, the user's currently valid new password is checked for correctness, block 35. The new password is the password that is currently valid for the user in the source system. If the new password is correct, then action proceeds to block 36 and the session is continued normally. If the new password is not correct, then the procedure goes on to block 37, where a comparison is performed to see whether the old password is correct. The old password is the password that was valid for the user before the change of the password. If the old, password is correct, then the process goes on to block 38, where the passwords are updated by storing the new password as the valid password and replacing the old password with the password that was valid at the instant of updating. After that, the procedure goes on to block 36 and the remote session is continued in the normal manner. If it is detected in block 37 that the old password is not correct, either, then the procedure goes on to block 39, where the setup of a remote session is prevented and the procedure is interrupted.

Although not presented here, it would be possible to go back from block 39 to block 34 and ask the source system to send the passwords again, thus giving a chance to correct a data transfer error that may have occurred when the passwords were first transmitted and to prevent an unnecessary interruption of the session.

The invention is not restricted to the examples of its embodiments described above, but many variations are possible within the scope of the inventive idea defined in the claims.

## Claims

1. Method for updating a password in a telecommunication network comprising:
a source system (LE1);
a target system (LE2);
an operation and maintenance network (OM) formed between the source and target systems (LE1, LE2); and
an operation and maintenance center (OMC) connected to the operation and maintenance network (OM),
in which method
log-on into the source system (LE1) is accomplished by supplying a user identification and a password corresponding to it,
a connection for a remote session is set up via the operation and maintenance center (OMC) to the target system (LE2),
the password is checked for correctness in the source and/or target system (LE1, LE2) by comparing the password with the password corresponding to the user identification that has been stored in the source and/or target system,
**characterized** in that, when the password corresponding to the user identification is to be changed,
the password valid at the instant of change is stored as the old password for the user identification in question;
the password that will be valid after the change is stored as the new password;
the old and the new passwords are sent to the target system (LE2); and log-on into the target system (LE2) is accepted if the old or the new password is correct.

2. Method as defined in claim 1, **characterized** in that, if the new password is not correct, then the old password is checked for correctness, otherwise the setup of the remote session is continued normally.

3. Method as defined in claim 1 or 2, **characterized** in that, if the old password is correct, then the new password is updated in the target system (LE2) and the setup of the remote session is continued.

4. Method as defined in any one of the preceding claims 1 - 3, **characterized** in that the password saved last after a password change is replaced with the old password.

5. Method as defined in any one of the preceding claims 1 - 4, **characterized** in that, in the target system (LE2), primarily the new password is checked.

6. Method as defined in any one of the preceding claims 1 - 4, **characterized** in that, in the target system (LE2), primarily the old password is checked, the new password is updated in the target system (LE2) if the old password is correct, and if the old password is not correct, then the new password is checked.

7. System for updating a password in a telecommunication network comprising:
a source system (LE1);
a target system (LE2);
an operation and maintenance network (OM) formed between the source and target systems (LE1, LE2); and
an operation and maintenance center (OMC) connected to the operation and maintenance network (OM),
in which system
log-on in the source system (LE1) is accomplished by supplying a user identification and a password corresponding to it,
a connection for a remote session is set up via the operation and maintenance center (OMC) to the target system (LE2),
the password is checked for correctness in the target system (LE2) by comparing the password with the password corresponding to the user identification that has been stored in the source and/or target system (LE1, LE2),
**characterized** in that the system comprises:
means (1) for storing for each user identification the old password valid at the instant of change;
means (2) for storing a new password as the password that will be valid after the change;
means (3) for sending the old and the new passwords to the target system (LE2); and
means (4) for checking the old or the new password for correctness.

8. System as defined in claim 7, **characterized** in that the system further comprises
a service block (5) connected to the source and/or target system (LE1, LE2) and/or to the operation and maintenance network (OM).

9. System as defined in claim 8, **characterized** in that the service block (5) comprises
an input/output block (6) for the input and/or output of commands or functions relating to operation and maintenance;
target selection block (7) for the selection of the system to be operated; and
a session control block (8) for the control of the session to be carried out via the service block.

10. System as defined in claim 8 or 9, **characterized** in that the service block (5) comprises
a communication block (9) for establishing connections between service blocks; and
a database (10) in which user information including passwords is stored.

11. System as defined in any one of the preceding claims 7 - 10, **characterized** in that the system comprises a terminal (11), which is connected via the input and output block (6) to the service block.
